# EUROPEAN PATENT SPECIFICATION

(11) **EP 0 448 270 B1**
(45) Date of publication and mention of the grant of the patent: **17.05.1995**
(21) Application number: 91302044.2
(22) Date of filing: 12.03.1991
(51) Int. Cl.: B60J 10/04

(54) **Glass run channel weather strip**
Dichtungsstreifen für einen Scheibenlaufkanal
Bande d'étanchéité pour un canal de guidage d'une glace coulissante

(30) Priority: 19.03.1990 US 495783
(43) Date of publication of application: 25.09.1991
(73) Proprietor: THE STANDARD PRODUCTS COMPANY, Cleveland Ohio 44102 (US)
(72) Inventor: Vaughan, Robert Albert, Dearborn, Michigan 48124 (US)
(74) Representative: Jones, Michael Raymond

(56) References cited:
- EP-A- 0 049 409
- EP-A- 0 241 264
- US-A- 4 894 968

## Description

This invention relates to vehicle weather stripping and, more particularly, to a two piece glass run channel.

Glass run channels are provided on motor vehicles for guiding and holding the window along its travel during its up and down motion. Several types of glass run channels exist in the art to provide this purpose. It is desirable to have a glass run channel member which is securable onto a single pinchweld flange of a stamped door construction. It is also desirable to have an elastomeric channel within the glass run channel to receive and seal the window.

EP-A-0049409 discloses a window sealing and guiding channel arrangement having an outer plastics channel incorporating a metal reinforcement. Inside the plastics channel is secured a rubber channel in which the window glass is guided.

US-A-4894968 discloses a belt weather strip retaining channel. The weather stripping includes members for retaining the weather stripping onto the flange of a vehicle. Discontinuties are coupled with the retaining members for enhancing retention of the weather stripping on the flange.

According to the present invention, there is provided a glass run channel weather strip comprising:
a first elongated member including a reinforcement member and a skin integrally bonded to the reinforcement member, the first member having a first and second generally U-shaped portions, the first generally U-shaped portion having means adapted for retaining the first member onto a flange and the second generally U-shaped portion comprising two legs separated by a web; and
a second elongated member having an overall general U-shape in cross-section and comprising two legs separated by a web and a finger member projecting from one of the legs of the generally U-shaped second member into the interior of the generally U-shaped second member to provide a seal when an edge region of a window is positioned in the channel of the second elongated member, there being means for mechanically retaining the second elongated member within the first elongated member (Glass run channel weather strip of the type disclosed in EP-A-0 049 409), characterised in that the first and second generally U-shaped portions form the first member having, in cross-section, an overall general S-shape, wherein the second generally U-shaped portion has one or more retaining channels in the form of one or more recesses formed in and extending longitudinally along the interior of at least one, of the legs of the second generally U-shaped portion formed on its interior, and in that one or more projecting members in the form of one or more protrusions project outwardly from and extend longitudinally along the exterior of at least one of the legs of the general U-shape of the second elongated member, the protrusions having shapes complementary to the shapes of the one or more recesses in the second generally U-shaped portion of the generally S-shaped member, the protrusions being adapted for coupling with the one or more recesses for mechanically retaining the second member within the first member.

Conveniently, the weather strip may have the one or more than one recess formed in one of the legs of the second generally U-shaped portion of the generally S-shaped first member.

Alternatively, there may be one or more than one recess formed in each leg of the second generally U-shaped portion of the generally S-shaped first member.

Conveniently, the integral skin surrounds the interior and exterior of the reinforcement member.

Conveniently, the skin covers the interior and exterior of the first generally U-shaped portion and the interior and a portion of the exterior of the second generally U-shaped portion of the generally S-shaped first member.

The second member may have the same number of protrusions extending outwardly therefrom as the number of recesses formed in the first member.

Conveniently, the second generally U-shaped portion of the generally S-shaped member has one leg longer than the other leg.

The generally U-shaped second member may have one leg shorter than the other leg.

Conveniently, the generally U-shaped second member includes a pair of webs at least partially defining a hollow duct.

The invention will be best understood from the accompanying drawings, taken in conjunction with the accompanying description, and in which:
Figure 1 illustrates a side elevation of a vehicle including a glass run channel weather strip in accordance with the present invention;
Figure 2 illustrates a perspective exploded enlarged view of the glass run channel weather strip of Figure 1;
Figure 3 is a cross-section of Figure 1 along a plane defined by line 3-3 thereof;
Figure 4 illustrates a cross-section of another embodiment of the glass run channel weather strip of the present invention;
Figure 5 illustrates a cross-section of yet another embodiment of the glass run channel weather strip of the present invention;
Figure 6 illustrates a cross-section of a further embodiment of the glass run channel weather strip of the present invention; and
Figure 7 illustrates a cross-section of a different embodiment of the glass run channel weather strip of the present invention.

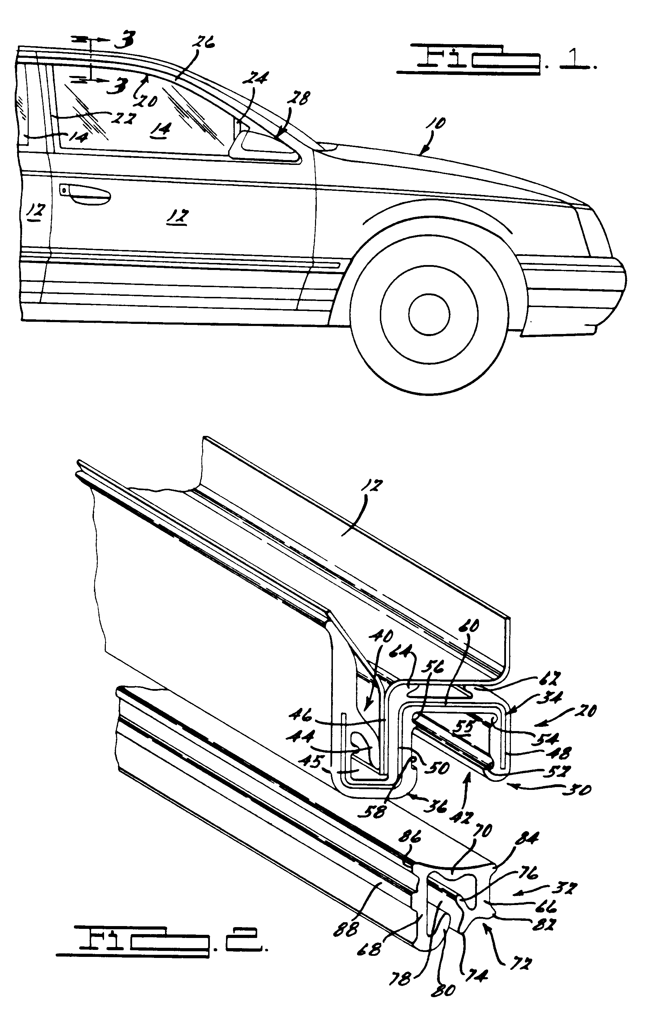

Turning to the Figures, particularly Figure 1, a vehicle is illustrated including the glass run channel weather strip of the present invention. The vehicle is designated with the reference numeral 10 and the glass run channel weather strip with the reference numeral 20. The vehicle 10 generally includes doors 12 having windows 14 held and guided in the glass run channel weather strip 20.

Generally the glass run channel weather strip 20 includes a pair of elongated side members 22, 24 and a header member 26. The side members 22 and 24 and header 26 may be of a unitary construction or individual components integrally formed together. Optionally, a vent or mirror plate section 28 may be included. The side members 22, 24 and header 26 may be formed from the same or different type of strips having the same or different cross-sections as desired to form the glass run channel weather strip 20.

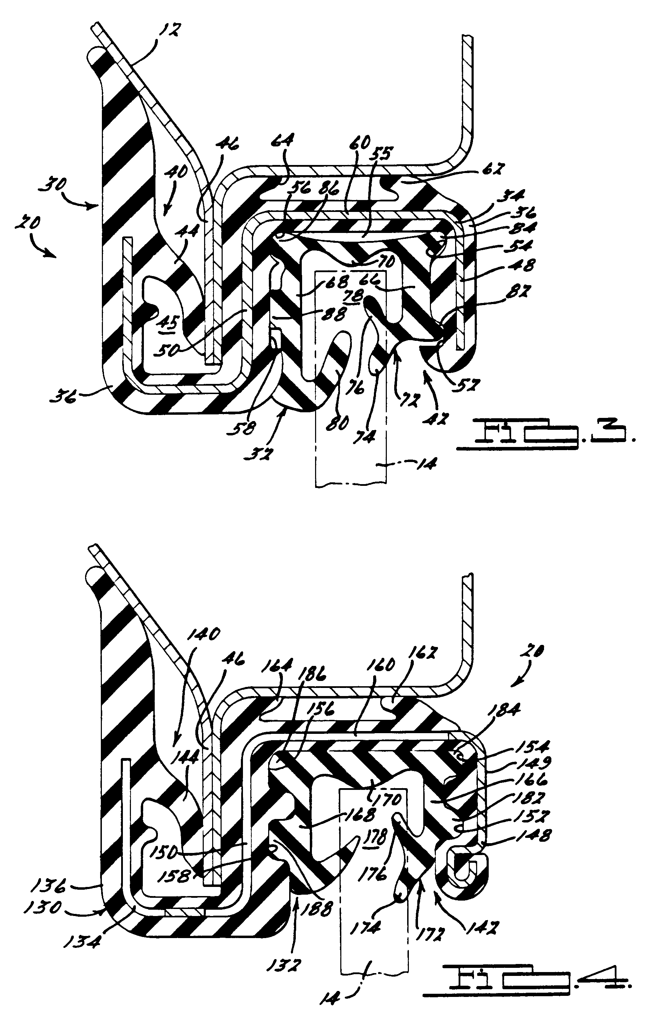

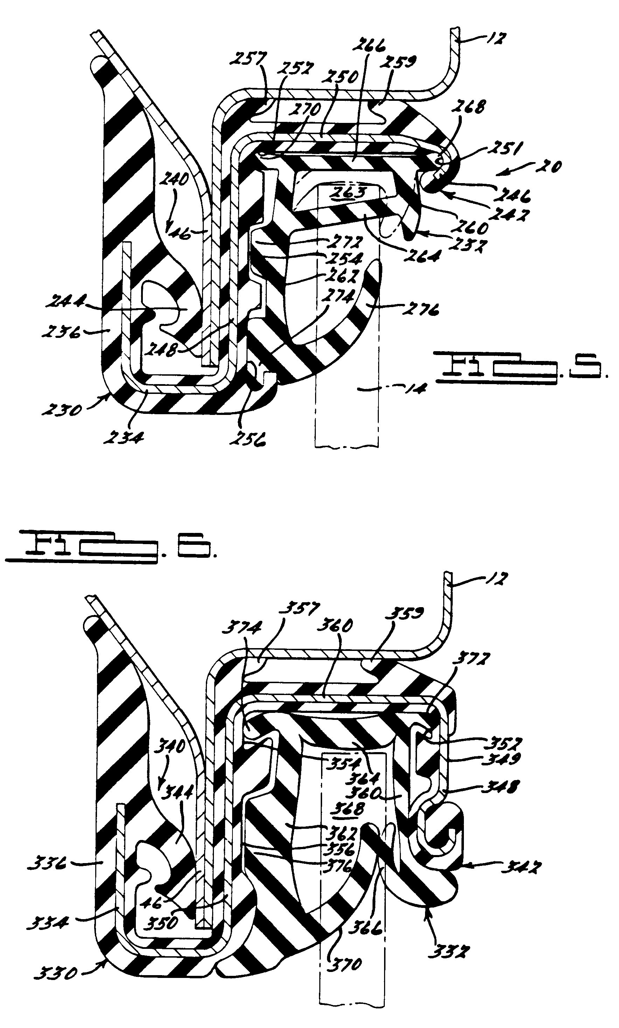

The glass run channel weather strip 20 includes a first frame member 30 and a second seal member 32 as seen in Figure 2. The frame member 30 includes a reinforcement member 34 with an integral skin 36. Generally, the frame member 30 has an overall general S-shape in cross-section as can be seen in Figures 2 and 3.

The frame member 30 includes a first generally U-shaped portion 40 and second generally U-shaped portion 42 which are inverted with respect to one another to form the overall generally S-shaped frame member 30. The first generally U-shaped portion 40 includes a retaining finger 44 to retain the frame member 30 onto the pinchweld flange 46 of the door 12. The retaining finger 44 is integrally formed with the skin 36 and projects inward into the interior of the channel 45 formed by the generally U-shaped portion 40. Several different types of finger arrangements may be used to provide a retaining mechanism to secure the frame member 30 onto the pinchweld flange 46.

The second generally U-shaped portion 42 includes the integral skin 36 on the interior and exterior of the reinforcement member 34 as can be seen in Figures 2 and 3. The skin 36, on the interior surface of legs 48 and 50, includes four retaining channels in the form of recesses 52, 54, 56 and 58. The recesses 52, 54, 56 and 58 have a desired shape and run the longitudinal length of the second generally U-shaped portion 42. The recesses 52, 54, 56 and 58 are adapted to receive the sealing member 32. Generally, the recesses 52, 54, 56 and 58 may be utilized on the legs 48 and 50 and also on the web 60 to retain the sealing member 32 within the channel 55 defined by the generally U-shaped portion 42. The frame member 30 also includes sealing members 62 and 64 to abut the vehicle door 12 to seal the frame member 30 against the contour of the door 12.

The sealing member 32 is an elongated member having an overall general U-shape in cross-section. The sealing member 32 is generally formed from an elastomeric material such as rubber. The generally U-shaped sealing member 32 is defined by a pair of legs 66 and 68 joined by a web 70. The leg 66 extends from the web 70 a distance less than leg 68. The leg 66 has a projecting hand 72 with a pair of fingers 74 and 76. The fingers 74 and 76 are adapted to position against the window 14 to receive and seal the window 14 within the channel 78 defined by the interior surface of the legs 66 and 68 and web 70. A finger 80 projects from the leg 68 into the channel 78 and is also utilized to seal the window 14 as can be seen in Figure 3. The exterior surface of leg 66 includes a pair of protrusions 82 and 84. The protrusions 82 and 84 have a shape complementary to the recesses 52 and 54 to mechanically secure the sealing member 32 within the recesses 52 and 54 of the frame member 30. Leg 68 also includes a pair of protrusions 86 and 88 projecting into recesses 56 and 58 to mechanically secure the sealing member 32 in the frame 30. Additionally, the recesses 86 and 88 may be complementary with the recesses 56 and 58.

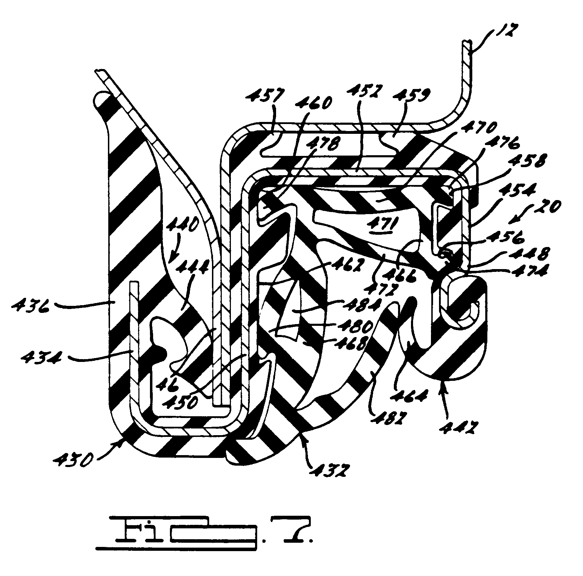

Moving to Figures 4-7, additional embodiments of the present invention are illustrated. Elements which are the same will be designated with the same reference numeral.

Referring to Figure 4, a frame member 130 and sealing member 132 are shown. The frame member 130 includes a reinforcement member 134 and integral skin 136. The frame 130 has an overall general S-shape in cross-section with generally U-shaped portions 140 and 142 inverted with respect to one another to form the general S-shaped frame member 130. The generally U-shaped portion 140 is substantially similar to that previously described having a retaining finger 144 securing the frame member 130 to flange 46.

The generally U-shaped portion 142 includes legs 148 and 150. Leg 148 has an outer exposed surface 149 to provide the vehicle with a pleasing aesthetic appearance. The free end of the leg is curled and is covered with the skin 136. The skin 136 covers the interior of the channel of the U-shaped portion 142 and also the exterior of the web 160 and leg 150. The skin 136 in the channel of the generally U-shaped portion 142 includes recesses 152, 154, 156, and 158. The recesses 152, 154, 156 and 158 are adapted to receive the sealing member 132 to mechanically hold the sealing member within the recesses 152, 154, 156 and 158. Also, sealing members 162 and 164 extend from the web 160 to seal the frame 130 against the contour of the vehicle door 12.

The sealing member 132 has an overall general U-shape in cross-section including legs 166 and 168 joined by web 170. The legs 166 and 168 extend substantially the same distance from the web 170. Leg 166 includes a hand member 172 with fingers 174 and 176, which are adapted to guide and seal the window 14. Leg 168 includes finger 180 which, along with finger 176, extends into the channel 178 defined by the legs 166 and 168 and web 170. The exterior surface of leg member 166 includes protrusions 182 and 184 having a shape complementary to the recesses 152 and 154 to couple with the recesses 152 and 154 to mechanically secure the seal member 132 within the frame 130. Leg 168 also includes protrusions 186 and 188 having a shape complementary to the recesses 156 and 158 to mechanically secure the seal member 132 within the frame 130.

Figure 5 illustrates another embodiment of the present invention. A frame member 230 and seal member 232 are shown. The frame member 230 includes a reinforcement member 234 and integral skin 236 surrounding the entire reinforcement member 234. The frame member 230 has an overall S-shape in cross-section formed by two generally U-shaped portions 240 and 242 inverted with respect to one another. The generally U-shaped portion 240 includes a retaining member 244 to secure the frame member 230 onto the flange 46.

The second U-shaped portion 242 has leg 246 which is substantially shorter than leg 248 extending from web 250. The skin 236 on the interior of leg 246 has a recess 251. Also, the skin 236 on the interior of leg 248 includes a plurality of recesses 252, 254 and 256. The recesses may have any desired shape as can be seen in Figure 5. Sealing members 257 and 259 extend from the web 250 to seal the frame 230 against the contour of the vehicle door 12.

The seal member 232 has an overall general U-shape in cross-section with a leg 260 substantially shorter than leg 262 extending from web 266. A pair of webs 264 and 266 join the legs 260 and 262. A hollow duct 263 is formed between the two webs 264 and 266 and the legs 260 and 262. A protrusion 268 extends from leg 260 into channel 251 to mechanically retain the seal member 232 within the frame 230. Also protrusions 270, 272 and 274 extend from the exterior surface of leg member 262 to couple with recesses 252, 254 and 256 to mechanically retain the seal 232 within the frame 230. The protrusions 270, 272 and 274 have shapes complementary with the recesses 252, 254 and 256. A finger 276 extends from leg 262 to seal the window 14 with leg 262. Also, as the window 14 contacts web 266, the free end of leg 260 will move inwardly to seal the window 14 as seen in phantom in Figure 5.

Moving to Figure 6, another embodiment of the present invention is shown. A frame 330 and sealing member 332 are illustrated secured on a flange 46. Frame 330 and sealing member 332 are illustrated secured on a flange 46. Frame 330 includes reinforcement member 334 substantially covered by integral skin 336. The frame member 330 has an overall general S-shape in cross-section formed by two generally U-shaped portions 340 and 342 inverted with respect to one another. The generally U-shaped portion 340 includes a retaining finger 344 to retain the frame 330 onto the flange 46.

The generally U-shaped portion 342 includes legs 348 and 350. Leg 348 has an exposed exterior surface 349 to provide an aesthetic appearance to the strip. Leg 348 also includes a curled free extending end covered by skin 336. The skin 336 covers the interior of the generally U-shaped portion 342. Recess 352 is formed in the skin 336 along the interior surface of leg 348. Also, recesses 354 and 356 are formed on the interior surface of leg 350. All of the recesses are adapted to receive the sealing member 332 to mechanically retain the sealing member 332 within the frame 330. Sealing members 357 and 359 extend from the web 360 to seal the frame 330 against the contour of the vehicle door 12.

The sealing member 332 is elongated and has an overall U-shape in cross-section. The U-shape is formed by legs 360 and 362 joined by web 364. Leg 360 extends a height away from web 364 less than that of leg 362. Leg 360 includes a sealing finger 366 extending into channel 368 of the generally U-shaped sealing member 332 to seal the window 14. Likewise, finger 370 extends into channel 368 from leg 362 to seal the window 14. Protrusion 372 extends from the exterior surface of leg 360 to mate with recess 352 to mechanically retain the seal 332 within frame 330. Also, protrusions 374 and 376 project from the exterior surface of leg 362 to couple with recesses 354 and 356 to additionally mechanically retain the seal 332 within frame 330.

Turning to Figure 7, another embodiment of the present invention is illustrated. A frame 430 is illustrated with a sealing member 432 secured to a flange 46. The frame 430 includes a reinforcement member 434 and an integral skin 436. The frame member 430 has an overall general S-shape formed by generally U-shaped portions 440 and 442 inverted with respect to one another. The generally U-shaped portion 440 includes a retaining finger 444 to retain the frame 430 onto the flange 46.

The generally U-shaped portion 442 includes legs 448 and 450 joined by web 452. The leg 448 has an exposed surface 454 to provide a pleasing aesthetic appearance. Also the free end of leg 448 is curled and covered by the integral skin 436. The skin 436 also covers the interior of the generally U-shaped portion 442. The integral skin 436 includes a plurality of recesses 456, 458, 460 and 462 on legs 448 and 450. The recesses have desired shapes and are adapted to receive the seal 432 to mechanically retain the seal 432 within the frame 430. A finger 464 extends from the integral skin 436 into the generally U-shaped portion 442 to provide a seal with a window 14. Also, sealing members 457 and 459 extend from web 452 to seal the frame 430 against the contour of the vehicle door 12.

The seal 432 has an overall general U-shape in cross-section formed by a pair of legs 466 and 468 joined by webs 470 and 472. Leg 466 extends a height away from the web 470 a distance less than that of leg 468. A hollow duct 471 is formed between the legs 466 and 468 and the webs 470 and 472. Protrusions 474 and 476 extend from the exterior surface of leg 466 to mate with the recesses 456 and 458 to mechanically retain the seal 432 within the frame 430. Likewise, leg 468 includes protrusions 478 and 480 on its exterior surface which mate with recesses 460 and 462 to mechanically retain the seal 432 within the frame 430. A finger 482 projects from leg 468 to seal the leg 468 with the window 14. Also, a hollow duct 484 is formed between protrusions 480 and leg 468.

The components of the invention described herein as "S-shaped" or "U-shaped" do not necessarily have to have too obvious a curved region or regions.

## Claims

1. A glass run channel weather strip (20) comprising:
a first elongated member (30) including a reinforcement member (34) and a skin (36) integrally bonded to the reinforcement member (34), the first member (30) having a first and second generally U-shaped portions (40, 42), the first generally U-shaped portion (40) having means (44) adapted for retaining the first member (30) onto a flange (46) and the second generally U-shaped portion (42) comprising two legs (48, 50) separated by a web (60); and
a second elongated member (32) having an overall general U-shape in cross-section and comprising two legs (66,68) separated by a web (70) and a finger member (80) projecting from one of the legs (68) of the generally U-shaped second member (32) into the interior of the generally U-shaped second member (32) to provide a seal when an edge region of a window (14) is positioned in the channel of the second elongated member (78), there being means for mechanically retaining the second elongated member (32) within the first elongated member (30), characterised in that
the first and second generally U-shaped portions (40, 42) form the first member (30) having, in cross-section, an overall general S-shape, wherein the second generally U-shaped portion (42) has one or more retaining channels in the form of one or more recesses (52, 54, 56, 58) formed in and extending longitudinally along the interior of at least one of the legs (48, 50) of the second generally U-shaped portion (42), and in that one or more projecting members in the form of one or more protrusions (82, 84, 86, 88) project outwardly from and extend longitudinally along the exterior of at least one of the legs (66, 68) of the general U-shape of the second elongated member (32), the protrusions (82, 84, 86, 88) having shapes complementary to the shapes of the one or more recesses (52, 54, 56, 58) in the second generally U-shaped portion (42) of the generally S-shaped member, the protrusions (82, 84, 86, 88) being adapted for coupling with the one or more recesses (52, 54, 56, 58) for mechanically retaining the second member (32) within the first member (30).

2. A weather strip according to claim 1, wherein the one or more than one recess is formed in one of the legs of the second generally U-shaped portion of the generally S-shaped first member.

3. A weather strip according to claim 1, wherein there is one or more than one recess formed in each leg of the second generally U-shaped portion of the generally S-shaped first member.

4. A weather strip according to any preceding claim, wherein the integral skin surrounds the interior and exterior of the reinforcement member.

5. A weather strip according to claims 1, 2 or 3, wherein the skin covers the interior and exterior of the first generally U-shaped portion and the interior and a portion of the exterior of the second generally U-shaped portion of the generally S-shaped first member.

6. A weather strip according to any preceding claim, wherein the second member has the same number of protrusions extending outwardly therefrom as the number of recesses formed in the first member.

7. A weather strip according to any preceding claim, wherein the second generally U-shaped portion of the generally S-shaped member has one leg longer than the other leg.

8. A weather strip according to any preceding claim, wherein the generally U-shaped second member has one leg shorter than the other leg.

9. The weather strip according to any preceding claim, wherein the generally U-shaped second member includes a pair of webs at least partially defining a hollow duct.

## Patentansprüche

1. Scheibenlaufkanal-Dichtungsstreifen (20), umfassend: ein erstes langgestrecktes Element (30) bestehend aus einem Verstärkungskörper (34) und einer Beschichtung (36), die mit dem Verstärkungskörper integral verbunden ist, wobei das erste Element (30) einen ersten und einen zweiten im allgemeinen U-förmigen Abschnitt (40, 42) aufweist, wobei der erste im allgemeinen U-förmige Abschnitt (40) über Mittel (44) verfügt, die so ausgeführt sind, daß sie das erste Element (30) auf einem Flansch (46) festlegen und wobei der zweite im allgemeinen U-förmige Abschnitt (42) zwei Schenkel (48, 50) umfaßt, die durch einen Steg (60) getrennt sind; und
ein zweites langgestrecktes Element (32), das im Querschnitt eine insgesamt im allgemeinen U-förmige Gestalt aufweist und zwei durch einen Steg (70) getrennte Schenkel (66, 68) umfaßt und einen fingerförmigen Fortsatz (80), der aus dem einen Schenkel (68) des im allgemeinen U-förmigen zweiten Elements (32) herausragt, um eine Dichtung bereitzustellen, wenn ein Randbereich eines Fensters (14) im Kanal des zweiten Elements (32) positioniert wird, wobei Mittel zur mechanischen Befestigung des zweiten Elements (32) innerhalb des ersten Elements (30) vorhanden sind,
dadurch gekennzeichnet,
daß der erste und zweite im allgemeinen U-förmige Abschnitt (40, 42) das erste langgestreckte Element (30) bilden, das im Querschnitt insgesamt eine im allgemeinen S-förmige Gestalt aufweist, wobei der zweite im allgemeinen U-förmige Abschnitt (42) einen oder mehrere Befestigungskanäle in der Form einer oder mehreren Ausnehmungen (52, 54, 56, 58), die innenseitig und längs des zumindest einen Schenkels (48, 50) des zweiten im allgemeinen U-förmigen Abschnittes (42) verlaufen, und daß ein oder mehrere vorspringende Teile in Form einer oder mehrerer Wülste (82,84, 86, 88) nach außen ragen und längs der Außenfläche zumindest eines der Schenkel (66, 68) des im allgemeinen U-förmigen zweiten langgestreckten Elements (32) verlaufen, wobei die Wülste (82, 84, 86, 88) in ihrer Formgebung komplementär zu der Gestalt der einen oder mehreren Ausnehmungen (52, 54, 56, 58) im zweiten im allgemeinen U-förmigen Abschnitt (42) des im allgemeinen S-förmigen Elements ausgebildet sind, wobei die Wülste (82, 84, 86, 88) so ausgeführt sind, daß sie in eine oder mehrere Ausnehmungen (52, 54, 56, 58) zur mechanischen Befestigung des zweiten Elementes (32) eingreifen.

2. Dichtungsstreifen nach Anspruch 1, wobei die eine oder mehr als eine Ausnehmung in einem der Schenkel des zweiten im allgemeinen U-förmigen Abschnitt des im allgemeinen S-förmigen ersten Elements eingeformt ist/sind.

3. Dichtungsstreifen nach Anspruch 1, wobei eine oder mehr als eine Ausnehmung in jedem der Schenkel des zweiten im allgemeinen U-förmigen Abschnittes des im allgemeinen S-förmigen ersten Elements ausgebildet sind.

4. Dichtungsstreifen nach einem der vorhergehenden Ansprüche, wobei die integrierte Beschichtung die Innen- und Außenfläche des Verstärkungskörpers umgibt.

5. Dichtungsstreifen nach Anspruch 1, 2 oder 3, wobei die Beschichtung die Innen- und Außenfläche des ersten im allgemeinen U-förmigen Abschnittes und einen Abschnitt der Außenfläche des zweiten im allgemeinen U-förmigen Teilkörpers des im allgemeinen S-förmigen ersten Elements bedeckt.

6. Dichtungsstreifen nach einem der vorhergehenden Ansprüche, wobei das zweite Element die gleiche Anzahl von nach außen ragenden Wülsten aufweist wie im ersten Element Ausnehmungen ausgebildet sind.

7. Dichtungsstreifen nach einem der vorhergehenden Ansprüche, wobei der zweite im allgemeinen U-förmige Abschnitt des im allgemeinen S-förmigen Elements einen längeren und einen kürzeren Schenkel aufweist.

8. Dichtungsstreifen nach einem der vorhergehenden Ansprüche, wobei das im allgemeinen U-förmige zweite Element einen kürzeren und einen längeren Schenkel aufweist.

9. Dichtungsstreifen nach einem der vorhergehenden Ansprüchen, wobei das im allgemeinen U-förmige zweite Element ein Stegpaar umfaßt, das zumindest teilweise einen Hohlkanal bildet.

## Revendications

1. Bande d'étanchéité (20) formant canal de guidage de vitre comportant:
un premier élément allongé (30) comportant un élément de renforcement (34) et un revêtement (36) relié en formant un tout avec l'élément de renforcement (34), le premier élément (30) ayant une première et une seconde parties (40, 42) généralement en forme de U, la première partie (40) généralement en forme de U ayant des moyens (44) adaptés pour retenir le premier élément (30) sur un rebord (46) et la seconde partie (42) généralement en forme de U comportant deux jambes (48, 50) séparées par une âme (60); et
un second élément allongé (32) ayant en coupe une forme globale généralement en U et comportant deux jambes (66, 68) séparées par une âme (70) et un élément (80) formant doigt faisant saillie, à partir d'une des jambes (68) du second élément (32) généralement en forme de U, vers l'intérieur du second élément (32) généralement en forme de U pour assurer l'étanchéité lorsqu'une zone formant bord d'une fenêtre (14) est positionnée dans le canal du second élément allongé (32), des moyens existant pour retenir de manière mécanique le second élément allongé (32) à l'intérieur du premier élément allongé (30), caractérisée en ce que
la première et la seconde parties (40, 42) généralement en forme de U constituent le premier élément (30) ayant, en coupe, une forme globale en S, dans lequel la seconde partie (42) généralement en forme de U a un ou plusieurs canaux de retenue sous la forme d'une ou plusieurs cavités (52, 54, 56, 58) formées dans la partie intérieure d'au moins une des jambes (48, 50) de la seconde partie (42) généralement en forme de U et s'étendant longitudinalement le long de celle-ci, et en ce qu'un ou plusieurs éléments faisant saillie sous la forme d'une ou plusieurs saillies (82, 84, 86, 88) font saillie vers l'extérieur à partir de l'extérieur d'au moins une des jambes (66, 68) de la forme générale en U du second élément allongé (32) et s'étendent longitudinalement le long de celle-ci, les saillies (82, 84, 86, 88) ayant des formes complémentaires aux formes des une ou plusieurs cavités (52, 54, 56, 58) situées dans la seconde partie (42) généralement en forme de U de l'élément généralement en forme de S, les saillies (82, 84, 86, 88) étant adaptées pour être reliées avec les une ou plusieurs cavités (52, 54, 56, 58) pour retenir de manière mécanique le second élément (32) à l'intérieur du premier élément (30).

2. Bande d'étanchéité selon la revendication 1, dans laquelle une ou plusieurs cavités sont formées dans une des jambes de la seconde partie généralement en forme de U du premier élément généralement en forme de S.

3. Bande d'étanchéité selon la revendication 1, dans laquelle existent une ou plusieurs cavités formées dans chaque jambe de la seconde partie généralement en forme de U du premier élément généralement en forme de S.

4. Bande d'étanchéité selon l'une quelconque des revendications précédentes, dans laquelle le revêtement intégral entoure l'intérieur et l'extérieur de l'élément de renforcement.

5. Bande d'étanchéité selon les revendications 1, 2 ou 3, dans laquelle le revêtement recouvre l'intérieur et l'extérieur de la première partie généralement en forme de U et l'intérieur et une partie de l'extérieure de la seconde partie généralement en forme de U du premier élément généralement en forme de S.

6. Bande d'étanchéité selon l'une quelconque des revendications précédentes, dans laquelle le second élément a le même nombre de saillies s'étendant vers l'extérieur à partir de celui-ci que le nombre de cavités formées dans le premier élément.

7. Bande d'étanchéité selon l'une quelconque des revendications précédentes, dans laquelle la seconde partie généralement en forme de U de l'élément généralement en forme de S a une jambe plus longue que l'autre.

8. Bande d'étanchéité selon l'une quelconque des revendications précédentes, dans laquelle le second élément généralement en forme de U a une jambe plus courte que l'autre.

9. Bande d'étanchéité selon l'une quelconque des revendications précédentes, dans laquelle le second élément généralement en forme de U comporte une paire d'âmes définissant au moins partiellement un conduit creux.
